# EUROPEAN PATENT SPECIFICATION

(11) **EP 2 258 996 B1**
(45) Date of publication and mention of the grant of the patent: **27.04.2016**
(21) Application number: 09723526.1
(22) Date of filing: 17.03.2009
(51) Int. Cl.: F27D 17/00, B01D 53/04, B01D 53/14, B01D 53/22, B01D 53/62, C10K 1/08, C10K 1/32, C21B 5/06, C21B 7/00, C10K 1/00, B01D 53/047

(54) **METHOD FOR SEPARATING BLAST FURNACE GAS**
VERFAHREN ZUR TRENNUNG EINES VERBRENNUNGSOFENGASES
PROCÉDÉ DE SÉPARATION DE GAZ DE HAUT FOURNEAU

(30) Priority: 18.03.2008 JP 2008069217
(43) Date of publication of application: 08.12.2010
(73) Proprietor: JFE Steel Corporation, Tokyo, 100-0011 (JP)
(72) Inventor: NAKAGAWA, Tsuguhiko, Tokyo, 100-011 (JP); HARAOKA, Takashi, Tokyo, 100-0011 (JP); KISHIMOTO, Akira, Tokyo, 100-0011 (JP); SAIMA, Hitoshi, Tokyo, 100-0011 (JP)
(74) Representative: Hoffmann Eitle
(86) International application number: PCT/JP2009/055722
(87) International publication number: WO 2009/116674

(56) References cited:
- JP-A- 60 022 919
- JP-A- 2004 309 067
- JP-A- 2007 182 350
- JP-A- 2007 261 824

## Description

### FIELD OF THE INVENTION

The present invention relates to a method for separating a blast furnace gas discharged from a blast furnace top into gases each containing a gas component as a main component.

### DESCRIPTION OF RELATED ARTS

In steel works, gases called by-product gases are generated from facilities such as coke oven, blast furnace, and converter. The gases contain nitrogen and carbon dioxide in addition to components, such as hydrogen, carbon monoxide, and methane, that can be used as fuels. Most of the by-product gases are used in usages that use heat generated by combustion such as in power generators and heating furnaces. However, since inert components such as nitrogen and carbon dioxide are contained in the by-product gases, the heat per volume is 700 to 4500 kcal/Nm³, which is low compared to common fuel gases such as propane gas and natural gas. In particular, the blast furnace gas has a heating value of about 700 kcal/Nm³, which is the lowest.

This is because the blast furnace gas contains little fuel components such as hydrogen, carbon monoxide, and methane, and heat generated by combustion of these fuel components is used to heat nitrogen and carbon dioxide that are not fuel components. Note that a blast furnace gas contains about 50 to 55 vol% nitrogen and 20 to 23 vol% carbon dioxide.

Accordingly, several proposals have been made regarding methods for removing inert components from the by-product gases, in particular, methods for separating and recovering carbon dioxide from blast furnace gas, to comply with recent demand for reducing the emission of carbon dioxide.

For example, Patent Document 1 proposes a method for manufacturing inert gas mainly composed of nitrogen and carbon dioxide, by which, after carbon monoxide is removed from gas, such as blast furnace gas, containing carbon monoxide and carbon dioxide, the gas is burned in the presence of a combustion catalyst to remove trace amounts of remaining combustible gas and oxygen. A proposal of separating carbon dioxide from the inert gas to obtain highly pure nitrogen has also been made.

Patent Document 2 proposes a method for manufacturing carbon monoxide- and hydrogen-rich gas by which carbon dioxide and nitrogen in a blast furnace gas are selectively separated by adsorption using an alumina adsorbent and a porous polystyrene by a pressure swing adsorption separation method of performing adsorptive separation under an increased pressure by bringing the gas into contact with an adsorbent and then performing desorption by desorbing the adsorbed component under a reduced pressure.

Patent Document 3 proposes that, in separating and recovering carbon dioxide by a chemical absorption method from by-product gases generated in steel works, low-grade exhaust heat of 500°C or lower generated in steel works is used in a process of absorbing carbon dioxide with a chemical liquid absorbent from the gases and heating the chemical liquid absorbent to separate carbon dioxide.
Patent Document 1: Japanese Unexamined Patent Application Publication No. 61-28446
Patent Document 2: Japanese Unexamined Patent Application Publication No. 62-193622
Patent Document 3: Japanese Unexamined Patent Application Publication No. 2004-292298

As proposed in Patent Documents 1 to 3, the technology for separating the respective components contained in the by-product gases generated in the steel works has been suggested but none is put to practice and all have problems to solve.

For example, in Patent Document 1, carbon monoxide in the blast furnace gas is separated by an absorption method. However, about 1 vol% of carbon monoxide remains in the gas after absorption of carbon monoxide, and hydrogen remains unabsorbed (refer to upper left column, p. 2 of Patent Document 1). They are completely burned by a burner installed downstream of the separator. The heat generated by remaining carbon monoxide and hydrogen is as large as 5% of the heat of the blast furnace gas but since the gas is diluted with large quantities of nitrogen and carbon dioxide, it is extremely difficult to effectively use the heat generated by the burner. Thus, Patent Document 1 wastes the heat equivalent to 5% of the heat of the blast furnace gas.

In Patent Document 2, an alumina-based adsorbent for adsorbing carbon dioxide in the blast furnace gas and a porous polystyrene for adsorbing nitrogen are charged in one adsorption tower, and carbon dioxide and nitrogen in the blast furnace gas are allowed to adsorb onto the adsorption tower to obtain a gas having a relatively high carbon monoxide concentration and a relatively high hydrogen concentration. However, since the recovery ratios of carbon monoxide and hydrogen do not exceed 80%, the remaining 20% of carbon monoxide and hydrogen are discharged as a low-heating-value gas mixed with carbon dioxide and nitrogen.

Moreover, in Patent Document 3, although carbon dioxide in the blast furnace gas is separated and recovered by a chemical absorption method, the carbon dioxide concentration in the blast furnace gas is about 20%. Although the effect of increasing the heating value can be achieved by separating carbon dioxide only, the effect of improvement is about 25%, which is limited. Thus, a gas having a high heating value cannot be obtained.

Moreover, all of the separation methods share a problem regarding injection of motive power. In Patent Document 1, heating to 100°C to 150°C or decreasing the pressure is needed to regenerate the liquid absorbent. In Patent Document 2, increasing the pressure to 2 ata for adsorption and decreasing the pressure to 0.1 ata for desorption are needed. In Patent Document 3, heating to 120°C is needed to regenerate the liquid absorbent. The heat source or the motive power for these are needed even by using exhaust heat.

As described above, increasing the heating value by removing the inert components from the steel works by-product gases is important from the viewpoint of reduction of carbon dioxide emission and energy conservation. However, in order to achieve practical application, the recovery ratios of fuel components such as carbon monoxide and hydrogen must be improved and the energy or cost for conducting separation must be reduced.

### SUMMARY OF THE INVENTION

It is an object of the present invention to provide a method for separating a blast furnace by which the blast furnace gas can be separated into gases mainly composed of respective components, in manufacturing a reformed blast furnace gas having a high heating value through separation and removal of carbon dioxide and nitrogen from the blast furnace gas, the method being capable of efficiently recovering the respective gas at high recovery ratios.

The inventors of the present invention have studied improvements of recovery ratios in separation of the blast furnace gas and the reduction of energy or cost from various viewpoints and have found that the object can be achieved by adequately combining the order of separation and separation techniques in separating the respective components from the blast furnace gas.

The present invention has been made on the basis of the abovementioned findings. In separating a blast furnace gas discharged from a blast furnace top into gases each containing a gas component as a. main component by using three-stage gas separation/refinement apparatuses, a method for separating the blast furnace gas according to a first invention comprises: separating the. blast furnace gas into a gas containing carbon dioxide and an unavoidable impurity gas component, a gas containing nitrogen, carbon monoxide. and an unavoidable impurity gas components, and a gas containing hydrogen, nitrogen and an unavoidable impurity gas component by using a first stage gas separation/refinement apparatus; wherein the first stage gas separation/refinement apparatus is a first adsorption separator that separates carbon dioxide, separating the gas containing nitrogen, carbon monoxide, and the unavoidable impurity gas component separated by using the first adsorption separator into a gas containing nitrogen and an unavoidable impurity gas component and a gas containing carbon monoxide and an unavoidable impurity gas component by using a second stage gas separation/refinement apparatus, and separating the gas containing hydrogen, nitrogen, and the unavoidable impurity gas component separated with the first adsorption separator into a gas containing hydrogen and an unavoidable impurity gas component by using a third gas separation/refinement apparatus.

A method for separating a blast furnace gas according to a second invention is characterized in that, in the first invention, the second stage gas separation/refinement apparatus is a second adsorption separator that separates carbon monoxide by adsorption.

A method for separating a blast furnace gas according to a third invention is characterized in that, in the first invention,
the second stage gas separation/refinement apparatus is a chemical absorber that separates carbon monoxide by absorption.

A method for separating a blast furnace gas according to a fourth or fifth invention is characterized in that, in the first invention, a. hydrogen permeable membrane or an adsorbent that adsorbs components other than hydrogen is provided as the third gas separation/refinement apparatus at the outlet side of the adsorption separator so as to separate a gas containing hydrogen and an unavoidable impurity gas components, from the gas containing hydrogen, nitrogen, and the unavoidable impurity gas component, separated with the adsorption separator.

According to the present invention, in separating the blast furnace gas mainly composed of hydrogen, nitrogen, carbon monoxide, and carbon dioxide into the respective gas components carbon dioxide which is easiest to separate is separated first. Thus, separation of the blast furnace gas can be conducted at a small motive power. Since two-stage gas separation/refinement apparatuses are used for separation, the respective gases can be separated at high separation ratios. Moreover, when the third stage gas separation/refinement apparatus, is used. to separates hydrogen, highly concentrated gas can be recovered from the blast furnace gas at a high recovery ratio and as a result, a reformed blast furnace gas having a higher heating value and containing high-concentration hydrogen and high-concentration carbon monoxide can be obtained. Due to these effects, the energy and cost injected for reparation can be reduced.

### BRIEF DESCRIPTION OF DRAWINGS

Fig. 1 is a flowchart showing a first embodiment of the present invention.
Fig. 2 is a flowchart showing a second embodiment of the present disclosure.
Fig. 3 is a flowchart showing a third embodiment of the present invention.
Fig. 4 is a schematic diagram showing a separation operation that uses pressure swing adsorption apparatuses in gas separation steps of a first stage and a second stage.
Fig. 5 is a schematic diagram of a separation operation when a hydrogen separator is a membrane separator in the first embodiment of the present invention shown in Fig. 4.
Fig. 6 is a schematic diagram of a separation operation when a hydrogen separator is an adsorption separator in the first embodiment of the present invention shown in Fig. 4.
Fig. 7 is a schematic diagram of a separation operation when a hydrogen separator is subjected to a deaeration operation in the first embodiment of the present invention shown in Fig. 4.
Fig. 8 is a schematic diagram of a separation operation when a hydrogen separator is subjected to a washing operation with hydrogen in the first embodiment of the present invention shown in Fig. 4.
Fig. 9 is a schematic diagram of a separation operation when a hydrogen separator is subjected to a reverse washing operation with hydrogen in the first embodiment of the present invention shown in Fig. 4.

Reference symbols in the drawings are as follows:
- 1: raw material gas holder
- 2: CO₂-PSA adsorption tower
- 3: raw material gas holder
- 4: CO-PSA adsorption tower
- 5: hydrogen separator
- 6: evacuating apparatus
- 7: blowing apparatus
- S1: first stage gas separation step
- S2: second stage gas separation step
- S3: third stage gas separation step

### EMBODIMENTS FOR CARRYING OUT THE INVENTION

The present invention will now be described in detail.

The composition of the blast furnace gas is 2.1.1 to 26.2 vol% carbon monoxide, 19.3 to 23.2. vol% carbon dioxide, 2.9 to 5.3 vol% hydrogen, and 52.5 to 5.9.2 vol% nitrogen. (Refer to Handbook of Steel and Iron, 4th edition (CD-ROM), No. 1, vol. 2, Pig iron and steel making, published July 30, 2002, Table 42-5·7 (2000) In order to manufacture a reformed blast furnace gas having a higher heating value from this blast furnace gas or the like, in the present invention, a three-stage gas separation refinement apparatus is used to separate the blast furnace gas into the respective gas components The blast furnace gas is separated into a gas containing carbon dioxide and an unavoidable impurity gas component, a gas containing nitrogen, carbon monoxide, and an unavoidable impurity gas components, and a gas containing hydrogen, nitrogen and an unavoidable impurity gas component by using a gas separation/refinement apparatus of the first stage. The gas containing nitrogen, carbon monoxide, and the unavoidable impurity gas component separated by the gas separation/ refinement apparatus of the first stage is spearated into a gas containing nitrogen and an unavoidable impurity gas component and a gas containing carbon monoxide and an unavoidable impurity gas component by using a gas separation/refinement apparatus of the second stage.

The "unavoidable impurity gas component" includes minor components, contained in the blast furnace gas as well as gas components, that are incidentally mixed for the sake of separation efficiency other than the components to be separated selected from the four components, (carbon monoxide, carbon dioxide, hydrogen, and nitrogen) described above, and 20 vol% of such components are: contained, at maximum. Note that the gas containing nitrogen, carbon monoxide, and the unavoidable impurity gas component sometimes contains hydrogen as the unavoidable impurity gas component. In other words, in some cases, "a gas containing hydrogen, nitrogen, and an: unavoidable impurity gas component" is separated from the gas discharged from the adsorption separator. The "gas containing nitrogen., carbon monoxide, and an unavoidable impurity gas component" is a concept that covers the case in which the "gas containing hydrogen, nitrogen, and an unavoidable impurity gas component" is separated and the case in which this gas is not separated.

As described above, according to the present invention, carbon dioxide is separated from the blast furnace gas in the gas separation/refinement apparatus of the first stage so that the load imposed on the carbon monoxide separation step can be reduced and the efficient separation is possible.

An adsorption separator that separates carbon dioxide. (also referred to as "CO₂" hereinafter) by adsorption is used as. the gas separation/refinement apparatus of the first stage. An adsorption separator that separates carbon monoxide (also referred to as "CO" hereinafter) by adsorption or a chemical absorbed that separates carbon monoxide by absorption, can. be used as the gas separation/refinement apparatus of the second stage.

A pressure swing adsorption technique (PSA technique), a temperature swing adsorption technique (TSA technique), or the like can b.e used as the absorptive separation method used as the gas separation/refinement apparatuses of the first and second stages. As the chemical absorber used as the gas separation/refinement apparatuses of the second stages, an amine method, a chilled ammonia method, or the like may be used for carbon dioxide and a method that uses as a liquid absorbent such as copper chloride•triamide hexamethylphosphate, aluminium chloride•toluene, or the like, may be used for carbon monoxide.

Note that the possible combinations of the separators of the first and second stages include "adsorption + adsorption" (first embodiment),
and "adsorption. + absorption" (third embodiment). When both the first and second stages employ the absorption method (second embodiment), hydrogen cannot be separated and loss occurs, which is not preferred.

Moreover, highly pure hydrogen can be separated by providing a hydrogen separator equipped with an adsorbent that absorbs components, other than hydrogen or a hydrogen-permeable film as a gas separation/refinement apparatus of a third stage at the outlet side of the adsorption separator (may be the separator of the first stage of the second stage).

The present invention will now be described in detail with reference two the drawings.

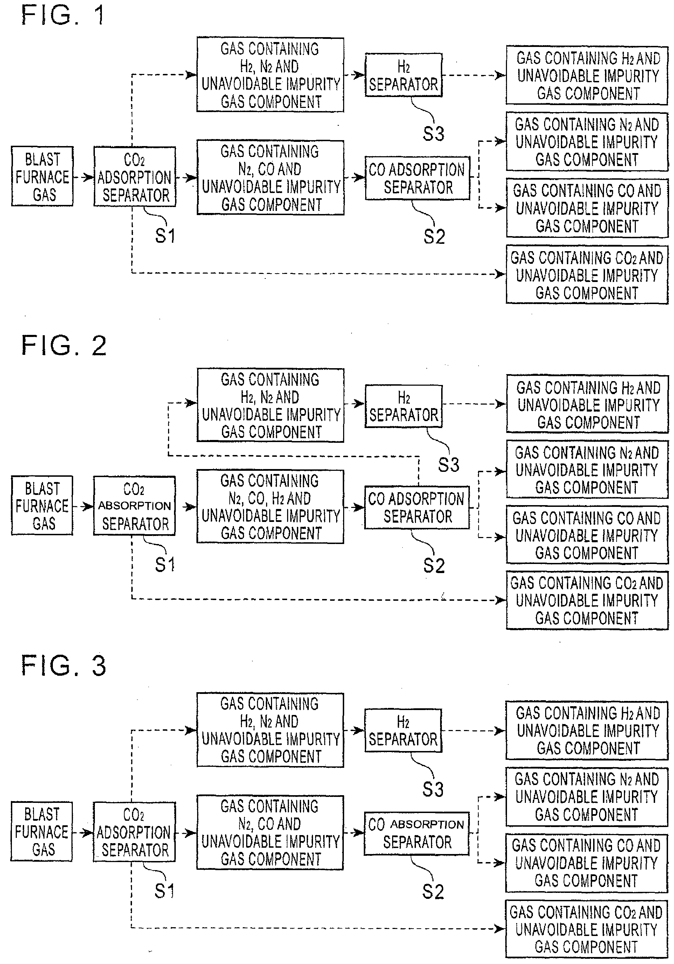

Fig. 1 is a flowchart showing a first embodiment of the present invention. A CO₂ adsorption separator is provided as a first-stage gas separation step (S1) to separate, with this CO₂ adsorption separator, the blast furnace gas into a gas (discharged from the separator at an initial period of discharge) containing hydrogen (also referred to as "H₂" hereinafter), nitrogen) (also preferred to as "N₂" hereinafter), and an unavoidable impurity gas component, a gas (discharged in the intermediate period of discharge) containing nitrogen, carbon monoxide, and an unavoidable impurity gas component, and a gas (discharged last) containing carbon dioxide and an unavoidable impurity gas component. A CO. adsorption separator is provided as a second-stage gas separation step (S2) to separate, with this CO adsorption separator, the gas containing nitrogen, carbon monoxide, and the unavoidable impurity gas component separated in the first stage gas separation step (S1) into a gas (discharged from the separator during the initial period of discharge) containing nitrogen and an unavoidable impurity gas component and a gas (discharged last) containing carbon monoxide and an unavoidable impurity gas component.

Note that the term "discharge" is used to refer to all procedures of discharge from an adsorption tower in the respective steps (adsorption, pressure reduction, cleaning, deaeration, etc.) of the pressure (temperature) swing adsorption method. The terms "initial", "intermediate", and "last" indicate the chronic order within one cycle constituted by respective steps.

The reason for separating carbon dioxide in the first stage gas separation step is as follows. When an adsorption separator is used to conduct separation, the adsorbability of the respective components to the adsorbent generally increases in the order of "hydrogen « nitrogen < carbon monoxide « carbon dioxide. The difference in adsorbability between nitrogen and carbon monoxide is generally small compared to the difference in adsorbability between other components. This shows that in separating a mixed gas containing hydrogen, nitrogen, carbon monoxide, and carbon dioxide into respective components by using an adsorption separator, carbon dioxide is easiest to separate since carbon dioxide adsorbs at a low pressure or a high temperature, i.e., separating carbon dioxide can be done by the smallest motive power. Moreover, according to the separation by the adsorption technique, injection of the motive power is needed for the components that are not subject to the separation. Since large quantities of components not subject to the separation are present in separating low-concentration components, a larger motive force is needed.

Furthermore, a hydrogen separator is provided as a third-stage gas separation step (S3) and this hydrogen separator is used to separate a gas containing hydrogen and an unavoidable impurity gas component from the gas containing hydrogen, nitrogen, and the unavoidably impurity gas component separated in the first stage gas separation step (S1). The third-stage gas separation step (S3) is essential for the present invention. An objet of obtaining a reformed blast furnace gas having a heating value per volume three times or more that of the blast furnace gas can be sufficiently achieved by mixing the gas containing hydrogen, nitrogen, and the unavoidably impurity gas component separated in the first stage gas separation step (S1) and the gas containing carbon monoxide and the unavoidable impurity gas component separated in the second-stage gas separation step (S2).

Fig. 2 is a flowchart showing a second embodiment of the present disclosure. A CO₂ absorption separator is provided as the first stage gas separation step (S1) and this CO₂ absorption separator is used to separate a blast furnace gas into a gas (discharged from an absorption tower) containing nitrogen, carbon monoxyde, hydrogen, and an unavoidable impurity gas component and a gas (discharged from a regeneration tower) containing carbon dioxide and an unavoidable impurity gas component. A CO absorption separator is provided as the second-stage gas separation step (S2) and this CO adsorption separator is used to separate the gas containing nitrogen, carbon monoxide, hydrogen, and the unavoidable impurity gas component separated in the first stage gas separation step (S1) into a gas (discharged from the separator in the initial period of discharge) containing hydrogen, nitrogen, and an unavoidably impurity gas component, a gas (discharged in the intermediate period of discharge) containing nitrogen and an unavoidable impurity gas component, and a gas (discharged last) containing carbon monoxide and an. unavoidable impurity gas component.

The reason for separating carbon dioxide first in the second embodiment is the same as that described in the first embodiment, i.e., to reduce the load on the second-stage gas adsorption separation step.

Furthermore, a hydrogen separator is provided as the third-stage gas separation step (S3) and this hydrogen separator is used to separate a gas containing hydrogen and an unavoidable impurity gas component from the gas containing hydrogen, nitrogen, and the unavoidable impurity gas component separated in the second stage gas separation step (S2).

Fig. 3 is a flowchart showing a third embodiment of the present invention. A CO₂. adsorption separator is provided as a first-stage gas separation step (S1) to separate, with this CO₂ adsorption separator, the blast furnace gas into a gas (discharged from the separator at an initial period of discharge) containing hydrogen, nitrogen, and an unavoidable impurity gas component, a gas (discharged in the intermediate period of discharge) containing nitrogen, carbon monoxide, and an unavoidably impurity gas component, and a gas (discharged last) containing carbon dioxide and an unavoidable impurity gas component. A CO absorption separator is provided as a second-stage gas separation step (S2) to separate, with this CO absorption separator, the gas containing nitrogen, carbon monoxide, and the unavoidable impurity gas component separated in the first stage gas separation step (S1) into a gas (discharged from the absorption tower) containing nitrogen and an unavoidable impurity gas component and a gas (discharged from the regeneration tower) containing carbon monoxide and an unavoidable impurity gas component.

Furthermore, a hydrogen separator is: provided as a third-stage gas separation step (S3) and this hydrogen separator is used to separate a gas containing hydrogen and an unavoidable impurity gas component from the: gas containing hydrogen, nitrogen, and the unavoidable impurity gas component separated in the: first stage gas separation step (S1). The third-stage gas separation step (S3) is essential as in the first embodiment.

The first embodiment of the present invention will now be described in further detail by citing actual examples.

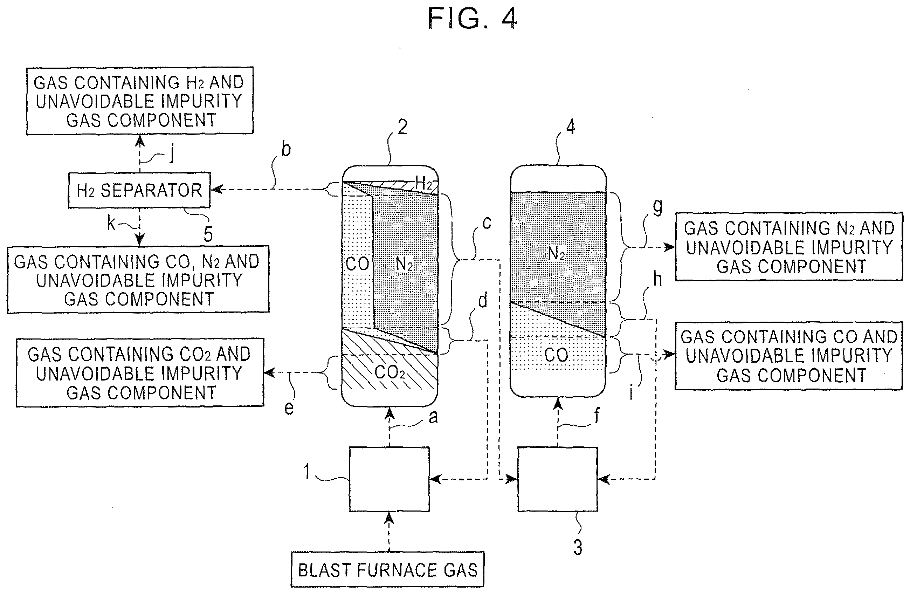

Fig. 4 is a. schematic diagram showing the. separation operation that uses. pressure swing adsorption (PSA) apparatuses as a CO₂ adsorption separator of the first stage gas separation step (S1) and a CO adsorption separator of the second-stage gas separation step (S2). In Fig. 4, reference numeral 1 denotes a raw material gas holder of a CO₂-adsorbing pressure swing adsorption apparatus (hereinafter referred to as "CO₂-PSA apparatus"), reference numeral 2 denotes an adsorption tower of the CO₂-PSA apparatus (referred to as "CO₂-PSA adsorption tower" hereinafter), reference numeral 3 denotes a raw material gas holder of a CO-adsorbing pressure swing adsorption apparatus (hereinafter referred to as "CO-PSA apparatus"), reference numeral 4 denotes an adsorption tower of the CO-PSA apparatus (hereinafter referred to as "CO-PSA adsorption tower"), reference numeral 5 denotes the hydrogen separator mentioned earlier. Note that the distribution states of the respective gas components inside the CO₂-PSA adsorption tower 2 and the CO-PSA adsorption tower 4 are merely schematic illustration for description and do not represent actual gas distribution in the towers.

The blast furnace gas discharged from the blast furnace is introduced into the raw material gas holder 1 of the CO₂-PSA adsorption apparatus, mixed in the raw material gas holder 1 with a gas d containing nitrogen, carbon monoxide, carbon dioxide, and an unavoidable impurity gas component returning from the CO₂-PSA adsorption tower 2 described below, and introduced to the CO₂-PSA adsorption tower 2 from the raw material gas holder 1. In such a case, dust (solid particles), mist (liquid fine particles), moisture, and sulfur in the blast furnace gas are preferably removed before the blast furnace gas is introduced into the raw material gas holder 1. This is because dust clogs pores of the adsorbent installed in the CO₂-PSA adsorption tower 2, thereby degrading performance, and mist and moisture relatively degrade the capacity of the adsorbent to adsorb carbon dioxide since they have higher adsorbability to the adsorbent than carbon dioxide and accelerate deterioration of the adsorbent. Sulfur degrades performance due to poisoning of adsorption sites of the adsorbent.

Any material that can separate hydrogen, nitrogen, carbon monoxide, and carbon dioxide to some degree can be used as the adsorbent to be charged in the CO₂-PSA adsorption tower 2. The adsorbent is not particularly specified and commercially available activated carbon and zeolite can be used. The pressure during adsorption and the pressure during desorption are not particularly limited but the adsorption pressure is preferably 100 to 500 kPa and the desorption pressure is preferably 5 to 100 kPa to facilitate operation.

A gas a (gas containing the blast furnace gas and circulating N₂, CO, CO₂, and an unavoidable impurity gas component) introduced into the CO₂-PSA adsorption tower 2 from the raw material gas holder 1 is separated into a gas b containing hydrogen, nitrogen, and an unavoidable impurity gas component, a gas c containing nitrogen, carbon monoxide, and an unavoidable impurity gas component, a gas d containing nitrogen, carbon monoxide, carbon dioxide, and an unavoidable impurity gas component, and a gas e containing carbon dioxide and an unavoidable impurity gas component, as shown in Fig. 4.

The gas b containing hydrogen, nitrogen, and the unavoidable impurity gas component can be directly used as a fuel gas in steel works but may be separated into a gas j containing hydrogen and an unavoidable impurity gas component, i.e., highly concentrated hydrogen, by providing a hydrogen separator 5. A gas k containing nitrogen, carbon monoxide, and an unavoidable impurity gas component separated from the gas b containing hydrogen, nitrogen, and the unavoidable impurity gas component can be recovered by the raw material gas holder 1 of the CO₂-PSA or the raw material gas holder 3 of the CO-PSA apparatus, but is diffused in air after being mixed with air using a catalyst and burned if the carbon monoxide content therein is so low that the motive power needed for separation needs to be increased. The hydrogen separator 5 may be a PSA apparatus that strongly adsorbs gas components (i.e., nitrogen) other than hydrogen or an adsorbent may be charged in the upper portion of the CO₂-PSA adsorption tower 2 separately from the adsorbent for CO₂. The hydrogen separator may be hydrogen separating film using the size of molecules.

The gas c containing nitrogen, carbon monoxide, and the unavoidable impurity gas component is fed to the raw material gas holder 3 of the downstream CO-PSA apparatus. The gas d containing nitrogen, carbon monoxide, carbon dioxide, and the unavoidable impurity gas component is fed to the raw material gas holder 1 of the CO₂-PSA apparatus as described above and mixed with the blast furnace gas. The separated gas e containing carbon dioxide and the unavoidable impurity gas component is highly pure CO₂ having a purity of 99% or higher and can be used as an inert gas or for dry ice.

The CO₂-PSA apparatus repeats introduction of a gas from the raw material gas holder 1 into the CO₂-PSA adsorption tower 2 and discharge of the gas from the CO₂-PSA adsorption tower 2.

The gas c containing nitrogen, carbon monoxide, and the unavoidable impurity gas component separated by the CO₂-PSA adsorption tower 2 is fed to the raw material gas holder 3 of the downstream CO-PSA apparatus, mixed in the raw material gas holder 3 with the gas h containing nitrogen, carbon monoxide, and the unavoidable impurity gas component returning from the CO-PSA adsorption tower 4 described below, and introduced as a gas f from the raw material gas holder 3 into the CO-PSA adsorption tower 4.

The adsorbent charged in the CO-PSA adsorption tower 4 can be any material that can separate carbon monoxide to some degree and is not particularly specified. Y-type zeolite and Y-type zeolite carrying monovalent copper or being subjected to ion exchange are preferred since they have good carbon monoxide-adsorbing capacity. The pressure during adsorption and the pressure during desorption are not particularly limited but the adsorption pressure is preferably 100 to 500 kPa and the desorption pressure is preferably 5 to 100 kPa to facilitate operation.

The gas f introduced from the raw material gas holder 3 into the CO-PSA adsorption tower 4 is, as shown in Fig. 4, separated into a gas g containing nitrogen and an unavoidable impurity gas component, a gas h containing nitrogen, carbon monoxide, and an unavoidable impurity gas component, and a gas i containing carbon monoxide and an unavoidable impurity gas component. The gas g containing nitrogen and the unavoidable impurity gas component is highly pure N₂ having a purity of about 99% and can be used as an inert gas in a converter or the like. The gas h containing nitrogen, carbon monoxide, and the unavoidable impurity gas component is fed to the raw material gas holder 3, as described above. The gas i containing carbon monoxide and the unavoidable impurity gas component is highly pure CO having a purity of 99% or higher and can be used as a fuel gas having a heating value of 3000 kcal/Nm³ or more. The gas i is also useful as a chemical raw material.

The CO-PSA apparatus repeats introduction of a gas from the raw material gas holder 3 into the CO-PSA adsorption tower 4 and discharge of the gas from the CO-PSA adsorption tower 4.

As a result, highly pure H₂, CO₂, N₂, and CO can be separated from the blast furnace gas. at a high efficiency and high separation ratio.

Note that the hydrogen separator 5 may be. a PSA apparatus that strongly adsorbs gas components other than hydrogen or a hydrogen-separating membrane. When the PSA apparatus that strongly adsorbs gas components other than hydrogen is used, it is preferable to conduct deaeration operation by reducing pressure or washing or reverse washing operation with hydrogen at the breakdown of the adsorbent with components other than hydrogen. The loss of carbon monoxide and nitrogen can be minimized by conducting deaeration operation by reducing pressure or washing or reverse washing operation using hydrogen.

Fig. 3 shows an example of the first embodiment in which the hydrogen separator 5 is a membrane separator. The gas k which contains carbon monoxide, nitrogen, and the unavoidable impurity gas component and. is separated and discharged at the same time as the gas j (highly pure hydrogen gas) containing hydrogen and the unavoidable impurity gas component by using the hydrogen separator 5 is introduced into the raw material gas holder 1 when the hydrogen concentration in the separated and discharged gas is high and into the raw material gas holder 3 when the hydrogen concentration in the separated and discharged gas is low.

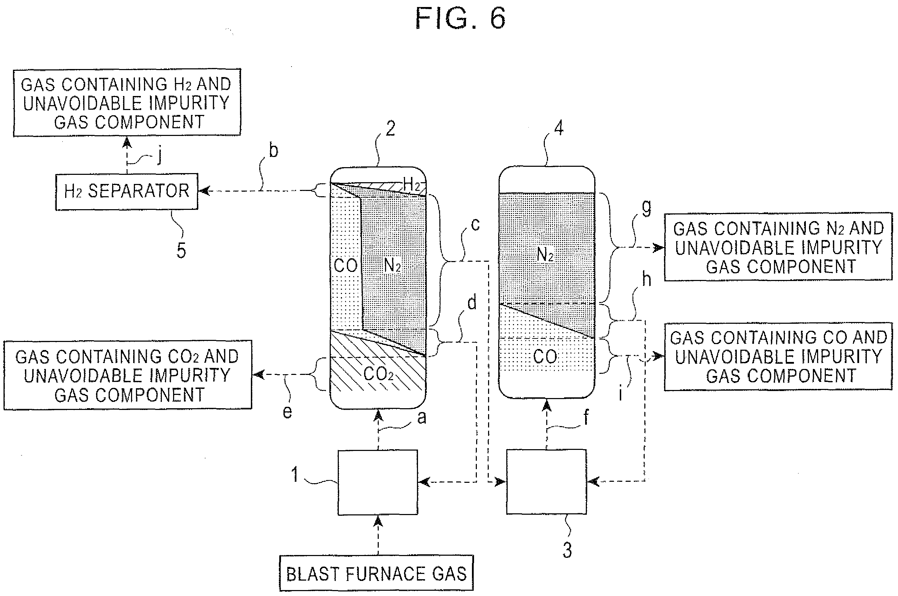

Fig. 6 shows an example of the first embodiment in which the hydrogen separator 5 is an adsorption apparatus. The gas b containing hydrogen, nitrogen, and the unavoidable impurity gas component is introduced into the hydrogen separator 5 to separate the gas j (highly pure hydrogen gas) containing hydrogen and the unavoidable impurity gas component.

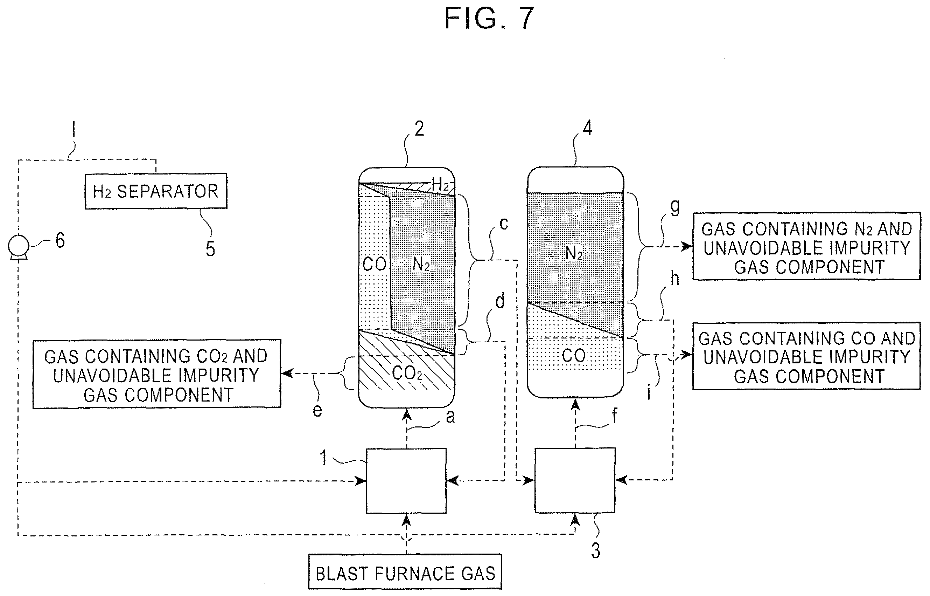

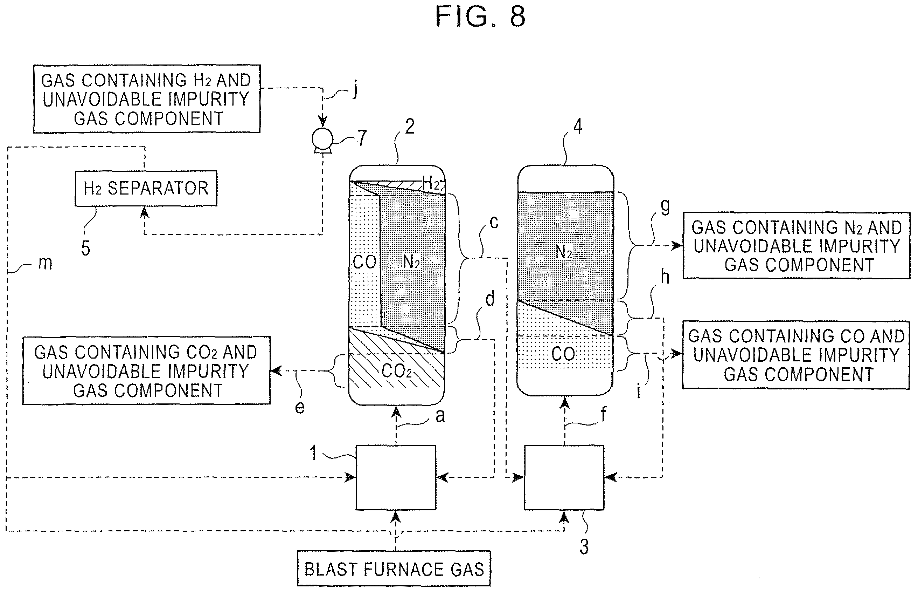

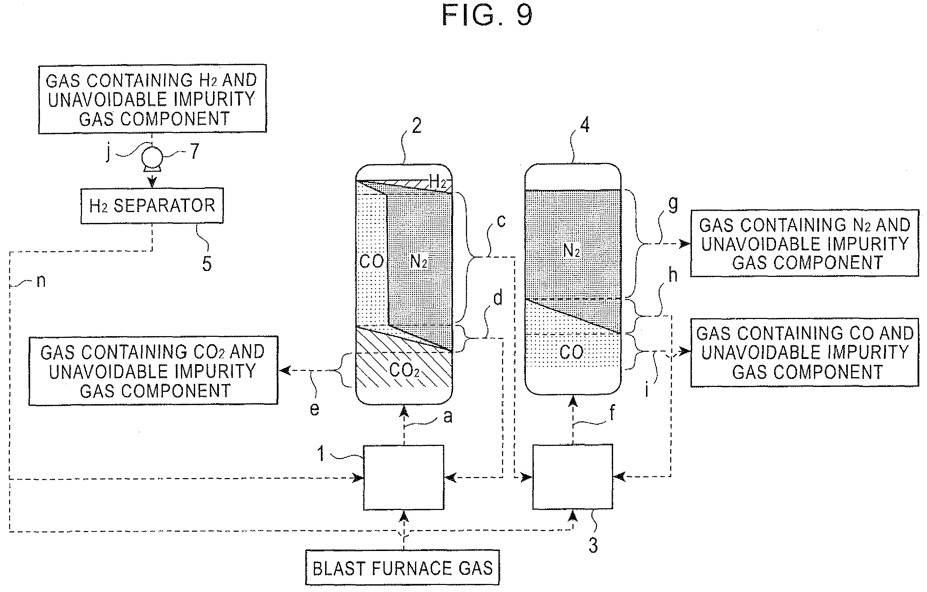

In the case where the hydrogen separator 5 is an adsorption apparatus, Fig. 7 is a schematic diagram of a separation operation when a deaeration operation of the adsorption apparatus is conducted by reducing pressure after separation of the gas j containing hydrogen and the unavoidable impurity gas component, Fig. 8 is a schematic diagram of a separation operation when a washing operation of the adsorption apparatus is conducted with hydrogen, and Fig. 9 is a schematic diagram of a separation operation when a reverse washing operation of the adsorption apparatus is conducted with hydrogen. Here, the washing operation with hydrogen means the washing operation in the forward direction and means that a hydrogen gas for washing is introduced in the same direction as the introduction of the gas during adsorption. Similarly, the reverse washing operation with hydrogen gas means a washing operation in the reversed direction and that the hydrogen gas for washing is introduced in a direction opposite the direction of introducing gas during the adsorption.

When the hydrogen separator 5 is an adsorption apparatus and the deaeration operation of the adsorption apparatus is to be conducted, CO, N₂, etc., remaining in the hydrogen separator 5 are evacuated with an evacuating apparatus 6 such as a vacuum pump, as shown in Fig. 7. A separated exhaust gas 1 mainly composed of CO and N₂ discharged is introduced into the raw material gas holder 1 when the hydrogen concentration in the separated exhaust gas is high and into the raw material gas holder 3 when the hydrogen concentration in the separated exhaust gas is low.

When a washing operation of the adsorption apparatus with hydrogen after separation of the gas j containing hydrogen and the unavoidable impurity gas component is to be conducted, as shown in Fig. 8, the separated gas j containing hydrogen and the unavoidable impurity gas component is introduced into the hydrogen separator 5 through a blowing apparatus 7 such as a blower to evacuate gas containing Co, N₂, and the unavoidable impurity gas component remaining in the hydrogen separator 5. A discharged gas m containing CO, N₂, H₂, and an unavoidable impurity gas component is introduced into the raw material gas holder 1 when the hydrogen concentration in the separated exhaust gas is high and into the raw material gas holder 3 when the hydrogen concentration in the separated exhaust gas is low.

Similarly, when the reverse washing operation of the adsorption apparatus with hydrogen is to be conducted, as shown in Fig. 9, the separated gas j containing hydrogen and the unavoidable impurity gas component is introduced into the hydrogen separator 5 by using the blowing apparatus 7 to evacuate the Co, N₂, and the unavoidable impurity gas component remaining in the hydrogen separator 5. A discharged gas n containing CO, N₂, H₂, and an unavoidable impurity gas component is introduced into the raw material gas holder 1 when the hydrogen concentration in the separated exhaust gas is high and into the raw material gas holder 3 when the hydrogen concentration in the separated exhaust gas is low.

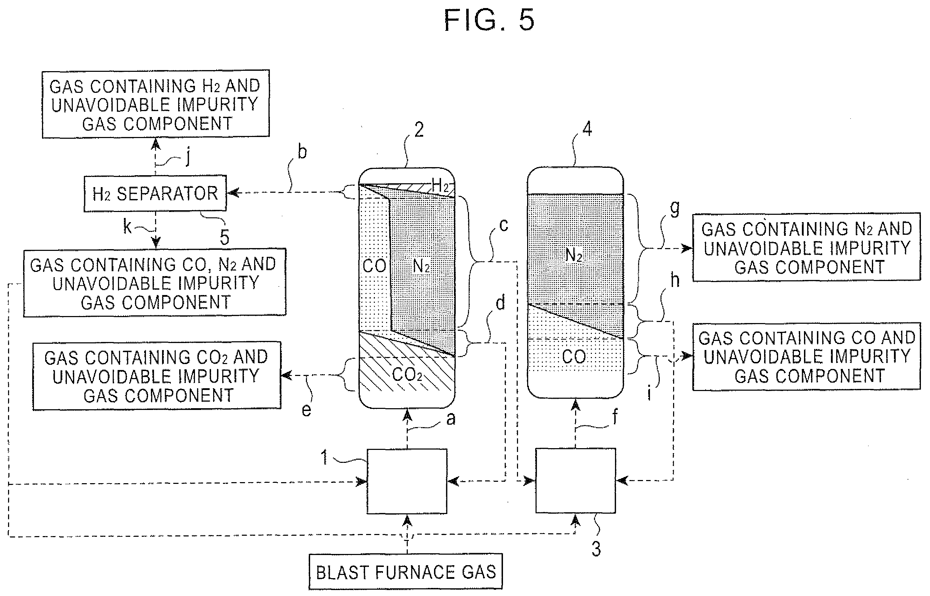

In this case, the reverse washing operation with hydrogen is more preferred since extra piping and the like are not needed. Note that in Figs. 5 to 9, the structure other than those described above are the same as those in Fig. 4. The same parts are represented by the sane reference symbols and the description therefor is omitted.

Table 1 below shows differences in injected power needed for gas separation between the method for separating the blast furnace gas according to the present invention, i.e., the method (referred to as "invention example") in which the first stage gas separation step is the step of separating carbon dioxide and the second stage gas separation step is a step of separating carbon monoxide, and a reversed method in which the first stage gas separation step is the step of separating carbon monoxide and the second stage gas separation step is the step of separating the carbon dioxide (referred to as "comparative example").

**Table 1**

| | | Invention example | Comparative example |
|---|---|---|---|
| First adsorption apparatus | Component mainly removed | CO₂ | CO |
| | Motive power required | 83 WH/Nm³ - input | 168 WH/Nm³ - input |
| Second adsorption apparatus | Component mainly removed | H₂, N₂, CO | H₂, N₂, CO |
| | Motive power required | 131 WH/Nm³ - input | 64 WH/Nm³ - input |
| Total motive power required | | 214 WH/Nm³ - input | 232 WH/Nm³ - input |
| Improvement in motive power efficiency (on the basis of comparative example) | | 8% | Standard |

As shown in Table 1, the injected power can be reduced when the first stage gas separation step is the step of separating carbon dioxide compared to when the first stage gas separation step is not the step of separating carbon dioxide. In other words, the blast furnace gas is separated with smaller amounts of injection energy according to the method for separating the blast furnace gas of the present invention.

## Claims

1. A method for separating a blast furnace gas, comprising:
separating a blast furnace gas discharged from a blast furnace top into a gas containing carbon dioxide and an unavoidable impurity gas component, a gas containing nitrogen, carbon monoxide and an unavoidable impurity gas component, and a gas containing hydrogen, nitrogen and an unavoidable impurity gas component by using a first stage gas separation/refinement apparatus, wherein the first stage gas separation/refinement apparatus is a first adsorption separator that separates carbon dioxide;
separating the gas containing nitrogen, carbon monoxide, and the unavoidable impurity gas component separated with the first adsorption separator into a gas containing nitrogen and an unavoidable impurity gas component and a gas containing carbon monoxide and an unavoidable impurity gas component by using a second stage gas separation/refinement apparatus; and
separating the gas containing hydrogen, nitrogen and the unavoidable impurity gas component separated with the first adsorption separator into a gas containing hydrogen and an unavoidable impurity gas component by using a third gas separation/refinement apparatus.

2. The method according to claim 1, wherein the second stage gas separation/refinement apparatus is a second adsorption separator that separates carbon monoxide by adsorption.

3. The method according to claim 1, wherein the second stage gas separation/refinement apparatus is a chemical absorber that separate carbon monoxide by absorption.

4. The method according to claim 1, wherein the third gas separation/refinement apparatus is a gas
separation/refinement apparatus having a hydrogen permeable membrane.

5. The method according to claim 1, wherein the third gas separation/refinement apparatus is a gas separation/refinement apparatus having an adsorbent that adsorbs components other than hydrogen.

## Patentansprüche

1. Verfahren zur Trennung von Hochofen-Gas, umfassend:
Auftrennen eines Hochofen-Gases, das von der Spitze eines Hochofens freigesetzt wird, in ein Gas, das Kohlenstoffdioxid und eine Gaskomponente mit unvermeidbaren Verunreinigungen enthält, ein Gas, das Stickstoff, Kohlenstoffmonoxid und eine Gaskomponente mit unvermeidbaren Verunreinigungen enthält, sowie ein Gas, das Wasserstoff, Stickstoff und eine Gaskomponente mit unvermeidbaren Verunreinigungen enthält, mittels Einsatz einer Gasseparations/Raffinier-Vorrichtung der ersten Stufe, worin die Gasseparations/Raffinier-Vorrichtung der ersten Stufe ein erster Adsorptionsseparator ist, der Kohlenstoffdioxid separiert;
Auftrennen des Gases, das Stickstoff, Kohlenstoffmonoxid und die Gaskomponente mit unvermeidbaren Verunreinigungen enthält, die mit dem ersten Adsorptionsseparator abgetrennt wurde, in ein Gas, das Stickstoff und eine Gaskomponente mit unvermeidbaren Verunreinigungen enthält, sowie ein Gas, das Kohlenstoffmonoxid und eine Gaskomponente mit unvermeidbaren Verunreinigungen enthält, durch Einsatz einer Gasseparations/Raffinier-Vorrichtung der zweiten Stufe; und
Auftrennen des Gases, das Wasserstoff, Stickstoff und die Gaskomponente mit unvermeidbaren Verunreinigungen enthält, die mit dem ersten Adsorptionsseparator abgetrennt wurde, in ein Gas, das Wasserstoff und eine Gaskomponente mit unvermeidbaren Verunreinigungen enthält, mittels Einsatzes einer dritten Gasseparations/Raffinier-Vorrichtung.

2. Verfahren gemäß Anspruch 1, worin die Gasseparations/Raffinier-Vorrichtung der zweiten Stufe ein zweiter Adsorptionsseparator ist, der Kohlenstoffmonoxid durch Adsorption abtrennt.

3. Verfahren gemäß Anspruch 1, worin die Gasseparations/Raffinier-Vorrichtung der zweiten Stufe ein chemischer Absorber ist, der Kohlenstoffmonoxid durch Absorption abtrennt.

4. Verfahren gemäß Anspruch 1, worin die dritte Gasseparations/Raffinier-Vorrichtung eine Gasseparations/Raffinier-Vorrichtung ist, die eine wasserstoffdurchlässige Membran aufweist.

5. Verfahren gemäß Anspruch 1, worin die dritte Gasseparations/Raffinier-Vorrichtung eine Gasseparations/Raffinier-Vorrichtung ist, die ein Adsorptionsmittel aufweist, das Komponenten außer Wasserstoff adsorbiert.

## Revendications

1. Procédé pour séparer un gaz de haut fourneau, comprenant :
la séparation d'un gaz de haut fourneau déchargé de la partie supérieure d'un haut fourneau en un gaz contenant du dioxyde de carbone et un composant gazeux formant une impureté inévitable, en un gaz contenant de l'azote, du monoxyde de carbone et un composant gazeux formant une impureté inévitable et en un gaz contenant de l'hydrogène, de l'azote et un composant gazeux formant une impureté inévitable en utilisant un appareil de séparation/raffinage de gaz de premier étage, dans lequel l'appareil de séparation/raffinage de gaz de premier étage est un premier séparateur par adsorption qui sépare le dioxyde de carbone ;
la séparation du gaz contenant de l'azote, du monoxyde de carbone et le composant gazeux forment une impureté inévitable séparé par le premier séparateur par adsorption en un gaz contenant de l'azote et un composant gazeux formant une impureté inévitable et en un gaz contenant du monoxyde de carbone et un composant gazeux formant une impureté inévitable en utilisant un appareil de séparation/raffinage de gaz de deuxième étage ; et
la séparation du gaz contenant de l'hydrogène, de l'azote et le composant gazeux formant une impureté inévitable séparé par le premier séparateur par adsorption en un gaz contenant de l'hydrogène et un composant gazeux formant une impureté inévitable en utilisant un troisième appareil de séparation/raffinage de gaz.

2. Procédé selon la revendication 1, dans lequel l'appareil de séparation/raffinage de gaz de deuxième étage est un deuxième séparateur par adsorption qui sépare le monoxyde de carbone par adsorption.

3. Procédé selon la revendication 1, dans lequel l'appareil de séparation/raffinage de gaz de deuxième étage est un absorbeur chimique qui sépare le monoxyde de carbone par absorption.

4. Procédé selon la revendication 1, dans lequel le troisième appareil de séparation/raffinage de gaz est un appareil de séparation/raffinage de gaz ayant une membrane perméable à l'hydrogène.

5. Procédé selon la revendication 1, dans lequel le troisième appareil de séparation/raffinage de gaz est un appareil de séparation/raffinage de gaz ayant un adsorbant qui adsorbe les composants autres que l'hydrogène.
